# EUROPEAN PATENT APPLICATION

(11) **EP 1 262 568 A1**
(43) Date of publication of application: **04.12.2002**
(21) Application number: 01202057.4
(22) Date of filing: 31.05.2001
(51) Int. Cl.: C22B 21/00, C22B 7/04, F27B 7/28, F27D 1/00

(54) **Rotary furnace vessel with protective lining on the basis of an alkaline-earth metal aluminate**

(71) Applicant: Corus Aluminium Voerde GmbH, 46562 Voerde (DE)
(72) Inventor: Müllerthan, Michael, 46562 Voerde (DE); Kleemans, Carel P., 1058 EP Amsterdam (NL)
(74) Representative: Hansen, Willem Joseph Maria

(57) **Abstract**

Rotary furnace vessel for metallurgical processes, comprising a shell which on its interior surface is covered with a refractory lining based on high purity alumina, spinel, or a combination thereof, characterised in that at least half of the refractory lining is coated, on its surface facing away from the shell, with an essentially continuous solid layer essentially consisting of alkaline-earth metal aluminate.

## Description

The invention relates to a rotary furnace vessel for metallurgical processes, comprising a shell which on its interior surface is covered with a refractory lining based on high purity alumina, spinel, or a combination thereof.

A combination of alumina and spinel is held to include a mixture of alumina and spinel.

An example of such a rotary furnace vessel is known from EP-A 0 690 139, as a furnace chamber for treatment of aluminium dross. The known rotary furnace vessel comprises a hollow body formed of a metal shell having its interior walls lined with a high-temperature resistant refractory construction based on high purity Al₂O₃, MgO, or spinel MgO· Al₂O₃ or a mixture thereof. The shell of the known furnace vessel has a cylindrical portion and portions at each longitudinal end wherein the walls of the shell taper inwardly. One end is closed by an end wall, while the other has an opening which is closable by a door mechanism. The known furnace vessel is rotatably and tiltably supported, which allows the vessel to rotate about its longitudinal axis at a velocity of about 1 to 25 rotations per minute, and permits tilting of the rotational axis between about 10 to 25° to the horizontal. The furnace vessel can also be tilted around a transverse axis for tapping off.

Aluminium dross occurs in, for example, the processing or production of aluminium when the metal comes into contact with air while it is in the molten state. Aluminium dross usually comprises aluminium oxide, aluminium nitride, other (metal) oxides and minerals originating from scrap or contaminants from melting furnaces. The aluminium dross also contains metallic aluminium in a concentration that depends on the process from which the aluminium dross originates.

Aluminium dross can be processed by separating aluminium from it to obtain aluminium dross residue, which is also known as non-metallic product. An example of such a process is described in EP-A 0 690 139. For processing aluminium dross, the dross is usually charged into the furnace vessel in the form of large solid pieces.

A disadvantage of the known rotary furnace vessel, is that the refractory lining suffers from mechanical abrasion when the aluminium dross, or other solid pieces, is charged into the vessel, and also during the further dross treatment operations during which the furnace is rotated.

It is an object of the invention to provide an improved rotary furnace vessel.

It is another object of the invention to provide a rotary furnace vessel with an improved resistance of the refractory lining against abrasion, and a method of preparing the same.

It is another object of the invention to provide a rotary furnace vessel that is suited both for separation of aluminium from aluminium dross forming aluminium dross residue, and for the production of calcium aluminate product from aluminium dross residue.

It is remarked that separation of aluminium from aluminium dross usually occurs under a reducing atmosphere, while the production of calcium aluminate product from aluminium dross residue may be performed under an oxidising atmosphere.

One or more of the above mentioned objects is achieved, when, according to the invention, at least half of the refractory lining is coated, on its surface facing away from the shell, with an essentially continuous solid layer essentially consisting of alkaline-earth metal aluminate.

It is found that such the continuous solid layer forms an excellent sacrificial protection layer for the underlying refractory lining. The lifetime of the underlying refractory lining is improved, as a result of the protective effect of the solid layer. The additional alkaline-earth metal aluminate solid layer can be replaced relatively cheaply and fast compared to a complete relining operation.

The alkaline-earth metal aluminate solid layer protects the refractory lining during normal operation of the charged furnace vessel in rotation. The solid layer essentially consisting of alkaline-earth metal aluminate also protects the refractory lining against impact damage resulting from heavy solid pieces as they are introduced into the furnace vessel.

The invention is especially advantageous when the rotary furnace vessel is used for processing of aluminium dross residue because it has also been found that the solid layer essentially consisting of alkaline-earth metal aluminate has non-sticking properties for aluminium dross residue.

The adhesion between the solid layer and the underlying refractory lining is found to be very good to refractory lining based on high purity alumina, spinel, or a combination thereof.

In an embodiment of the invention, the essentially continuous solid layer essentially consists of eutectic alkaline-earth metal aluminate. The eutectic composition is easily obtainable.

In an embodiment, the alumina is alumina obtained from aluminium dross residue. This is a source of alumina that is compatible with an important application of the rotary furnace vessel, i.e. processing of aluminium dross residue into alkaline-earth metal aluminate product.

In an embodiment, the alkaline-earth is Ca. In this embodiment, the protective layer consists essentially of calcium aluminate. This is compatible with an important application of the rotary furnace vessel, i.e. processing aluminium dross residue into calcium aluminate.

In an embodiment of the invention, the solid layer has a thickness in a range of 1 to 100 mm over the majority of its presence. Typically, a few centimetres, in particular about 50 mm, of protective layer has been found to be practical and to provide sufficient protection at the same time.

Some of the above-described embodiments of the essentially continuous solid layer consisting essentially of alkaline-earth metal aluminate may be formed monolithic as ramming mix or gunning mix.

In an embodiment, the essentially continuous solid layer has been formed from a mixture of an alkaline earth metal oxide and alumina that has reacted in direct contact with the refractory lining to form the alkaline-earth metal aluminate. Such a layer is applied to the refractory lining in a fast and cheap. Moreover, the adhesion of the solid layer to the underlying refractory lining is found to be particularly good if the refractory lining contains alumina, possibly due the formation of an intermediate layer of non-eutectic phases between the alkali-aluminate solid layer and the underlying refractory lining.

In one particular embodiment wherein the essentially continuous solid layer has been formed from a mixture that has reacted in direct contact with the refractory lining to form the alkaline-earth metal aluminate, the refractory lining comprises fused or tabular alumina in a range of 90 to 99 %. An amount of alumina in the refractory lining of at least 90 % has the advantageous effect of sufficient chemical resistance of the refractory lining against liquid aluminium and liquid alkaline-earth metal aluminate, in particular against liquid calcium aluminate, and a high chemical resistance against both reducing and oxidising environments. This property is believed to be a result of the formation of an intermediate layer of non-eutectic phases of the mixture that has reacted in direct contact with the alumina containing refractory lining. By limiting the amount of alumina in the refractory to 99 %, the refractory lining can still be sufficiently bonded by a binding substance, for instance, a hydraulic binding cement.

In a more particular embodiment thereof, the amount of alumina in the refractory lining is at least 95 %. This has the advantage of even higher chemical resistance.

Due to these excellent properties of this type of alumina containing refractory lining, a rotary furnace vessel provided with the alumina containing refractory lining according to this embodiment can also be advantageously used without having been coated with the above described protective layer.

Alternatively, the refractory lining comprises alumina with a spinel MgO·Al₂O₃ addition up to 60 % by weight to the alumina in the refractory lining. A spinel addition in the range of 30 to 40 % is preferred, because such a spinel addition has surprisingly revealed the least erosion of the underlying spinel-added refractory lining.

The remainder of the refractory lining (with or without the spinel MgO·Al₂O₃ addition) comprises a binder, preferably a hydraulic binding cement. Both low cement castable and ultra low cement castable can be used, but it has been found that the abrasion resistance is higher in the case of a low cement castable lining of the above described type than in the case of an ultra low cement castable.

The refractory lining can be applied in various ways, for example as moulded bricks, or in unshaped manner as ramming mix, or castable or gunning mix. The monolithic type applications are preferable.

In another aspect of the invention, the invention relates to a method of providing a protective layer on a refractory lining of a rotary furnace vessel for metallurgical processes.

According to the method of the invention, the rotary furnace vessel is provided, having a shell that on its interior surface is covered with the refractory lining, which refractory lining is based on high purity alumina, spinel, or a combination thereof, which rotary furnace vessel is at least partially filled with an alumina containing mixture, a compound comprising an alkaline earth metal and oxygen is added to the alumina containing mixture in the rotary furnace vessel to obtain a mixture containing alumina and alkaline-earth metal oxide, which mixture is then reacted at an elevated temperature to form alkaline-earth metal aluminate as an at least partially melted material, the elevated temperature being above the eutectic melting point of the mixture, and subsequently cooling down the rotary furnace vessel to a temperature below the eutectic melting point, during which cooling down the furnace is rotated around its axis of rotation and still containing at least part of the reacted aluminium dross residue.

Herewith a rotary furnace vessel is obtained of which the inside surface of the underlying refractive lining is provided with a protective layer being an essentially continuous solid layer of essentially the alkaline-earth metal aluminate covering at least half of the alumina-containing refractory lining on its surface facing away from the shell. The method according to the invention is a fast and cheap way to install or reinstall the protective solid layer.

The adhesion of the protective layer is particularly good if the refractory lining contains alumina, due to the formation of an intermediate layer of non-eutectic phases of the mixture during the reaction which takes place in direct contact with the underlying alumina containing refractory lining.

By rotating the furnace vessel during cooling down it is achieved that an entire circumference of the interior surface of the vessel is covered by the solid layer.

In a particular embodiment, the alumina containing mixture is provided in the form of aluminium dross residue. Aluminium dross residue is a relatively cheap source of alumina. By preparing the rotary furnace vessel in this way, the prepared rotary furnace vessel according to the invention can be obtained as a by-product of a process of producing an alkaline-earth metal aluminate from aluminium dross residue, by drawing part of the reacted dross residue from the furnace vessel and forming the solid layer with the remainder of the alkaline-earth metal aluminate.

When the reacting mixture of the alkaline-earth metal oxide and aluminium dross residue comes in contact with the refractory lining, in particular when the refractory lining contains alumina, one or more thin layers of solid aluminium rich non-eutectic phases form on the refractory lining, which protect the alumina particles in the lining from further chemical reaction with the reactive contents of the vessel. These layers also provide an excellent adhesion layer for the solidifying eutectic mixture of the reacted aluminium dross residue that forms during cooling down.

If the tilt angle between the axis of rotation of the furnace vessel and the vertical direction is varied as well during the cooling, even more of the interior surface will be covered by the solid layer.

In an embodiment of the invention wherein a calcium-oxide compound is used as the alkaline-earth metal oxide, the elevated temperature is chosen between 1360°C and 1800°C. Preferably, the elevated temperature is chosen below 1600 °C. At least 1360°C is required in order to exceed the eutectic melting point. The advantage of raising the temperature higher than 1360°C is that a more homogeneous melt can be obtained with more diffusion. Calcium aluminate can be formed well up to at least 1800°C, but above 1600°C, the advantage of homogeneity is outweighed by apparent disadvantages of higher energy consumption and higher thermal loading of the refractory lining.

When pure aluminate is used for the reaction mixture, the temperature is preferably raised to at least 1400°C in order to exceed the eutectic temperature of the pure binary system of Al₂O₃ and CaO.

In another embodiment wherein a calcium-oxide compound is used as the alkaline-earth metal oxide, calcium-oxide is added to the aluminium dross residue in an amount to obtain a weight ratio Al₂O₃:CaO between 1:0,5 and 1:1,2 in the mixture. This achieves an efficient use of components to form calcium aluminate of eutectic composition.

When the protective layer is formed as a by product during processing of aluminium dross residue into calcium aluminate product, a weight ratio of Al₂O₃:CaO of between 1:0.8 and 1:1.2, in particular about 1:1, is preferred in the melt mixture to achieve an efficient yield of eutectic calcium aluminate. However, it is found that a mechanically more stable protective layer is formed using a weight ratio of Al₂O₃:CaO of between 1:0.5 and 1:0.8 in the melt mixture, in particular about 1:0.6. These ratios are therefore advantageous if the main aim is to provide the rotary furnace vessel with a good protective layer.

In another aspect, the invention relates to a method of processing aluminium dross to obtain separated aluminium and aluminium dross residue, wherein the aluminium dross is introduced into a rotary furnace vessel comprising a shell which on its interior surface is covered with a refractory lining based on high purity alumina, spinel, or a combination thereof, and the aluminium dross is heated to a temperature above the melting point of aluminium and aluminium metal is separated from a solid aluminium dross residue.

It is remarked that a process of separating aluminium from aluminium dross is described in for instance EP-A-0690139.

According to the invention there is provided that, before introducing the aluminium dross into the rotary furnace vessel, at least half of the refractory lining is coated, on its surface facing away from the shell, with an essentially continuous solid layer essentially consisting of an alkaline-earth metal aluminate.

Herewith the advantage is achieved that aluminium and aluminium dross residue can be obtained from aluminium dross at lower cost, because the service life of the processing installation is improved. The improvement is a consequence of the abrasion protection of the underlying refractory lining by the solid layer during normal operation of the rotary furnace vessel in rotation carrying solid pieces of aluminium dross and aluminium dross residue, as well as the impact protection of the refractory lining by the solid layer against impact damage resulting from heavy solid pieces of aluminium dross as they are introduced into the furnace vessel.

It has also been found that the solid layer has non-sticking properties for aluminium dross residue, so that this can be removed from the furnace vessel with less severe scraping action and consequently less damage to the refractory lining.

The service life is also improved by improved chemical resistance of the refractory lining by the solid layer against liquid aluminium and the reducing atmosphere.

As will be appreciated by the skilled person, further advantageous embodiments of this aspect of the invention comprise the use of any of the above-described embodiments of the rotary furnace vessel.

In yet another aspect, the invention relates to a method of processing aluminium dross residue, wherein the dross residue is reacted in rotary furnace vessel having a shell which on its interior surface is covered with a refractory lining bassed on high purity alumina, spinel, or a combination thereof, at an elevated temperature with an alkaline-earth metal oxide to form alkaline-earth metal aluminate as an at least partially melted material, the elevated temperature being above a eutectic melting point of the aluminium dross residue and alkaline-earth metal oxide mixture, and wherein the melted material is cooled to obtain the alkaline-earth metal aluminate in a solid form.

According to this aspect, the method is characterised in that, before reacting the aluminium dross residue with the alkaline-earth metal oxide, at least half of the refractory lining is coated, on its surface facing away from the shell, with an essentially continuous solid layer essentially consisting of an alkaline-earth metal aluminate.

Advantageous embodiments of this aspect of the invention comprise the use of any of the above-described embodiments of the rotary furnace vessel.

Particulars and advantages related to the use of any of these embodiments of the rotary furnace vessel for processing aluminium dross residue have been discussed in the previous paragraphs.

In yet another aspect of the invention, the invention relates to a method of recycling metallic coated scrap pieces of which the liquidus temperature of the coating layer is lower than the solidus temperature of the core layer, such as brazing sheet scrap pieces, by introducing the scrap pieces into a rotary furnace vessel, then at least partially removing the coating layer from the core of the scrap pieces by heating the scrap pieces to a temperature above the solidus temperature of the coating layer while rotating the rotary furnace vessel.

In the context of the present description, the term "coated scrap pieces" is understood to include plated scrap pieces, and the term "coating layer" is understood to include plating layers.

An embodiment of this method is described in WO 99/32260. In the known embodiment the scrap pieces are introduced into a rotatable furnace drum, together with an abrading medium. The contents are heated to a temperature at which the metallic coating appears to be very weak and possibly partly molten and can be removed simply and effectively by an abrasive action resulting from rotational tumbling of the scrap pieces and the abrading medium.

In the known embodiment, the inside of the rotatable drum wears as a result of the tumbling of solid pieces inside, and as a result of impact damage that occurs during introducing the solid pieces inside the drum. Especially a refractory lining, which is usually present in metallurgical vessels such as the rotatable furnace drum suffers from heavy abrasion. This leads to a limitation on the service lifetime of the furnace drum, and thus to an increase in cost of the recycled product.

The wear of the inside surface of the rotatable drum is strongly reduced according to the invention, by using the rotary furnace vessel that has a shell which on its interior surface is covered with a refractory lining based on high purity alumina, spinel, or a combination thereof, of which at least half is coated, on its surface facing away from the shell, with an essentially continuous solid layer essentially consisting of an alkaline-earth metal aluminate.

Other advantageous embodiments of this aspect of the invention comprise the use of any of the above-described embodiments of the rotary furnace vessel.

It has been found particularly advantageous to use the rotary furnace vessel according to the invention for recycling a number of batches of metallic coated scrap pieces and then using the same rotary furnace vessel in the method of treating aluminium dross residue to produce alkaline-earth metal aluminate.

Herewith it is achieved that the solid protective layer, which may be at least partly abraded in the course of performing the recycling process, is refreshed as a final step in the course of producing alkaline-earth metal aluminate.

The invention will now be explained with reference to the drawing of which
FIG. 1 shows schematically a rotary furnace vessel, having a refractory construction embodying the invention;
FIG. 2 shows schematically the rotary furnace vessel in cross section along line II in Fig. 1;
FIG. 3 shows schematically a detail of the refractory construction indicated at III in Fig. 2;
FIG. 4 shows schematically the phase diagram of the CaO / Al₂O₃ system; and
FIG. 5 shows schematically a cross sectional micrograph of the solid layer covering the underlying refractory lining.

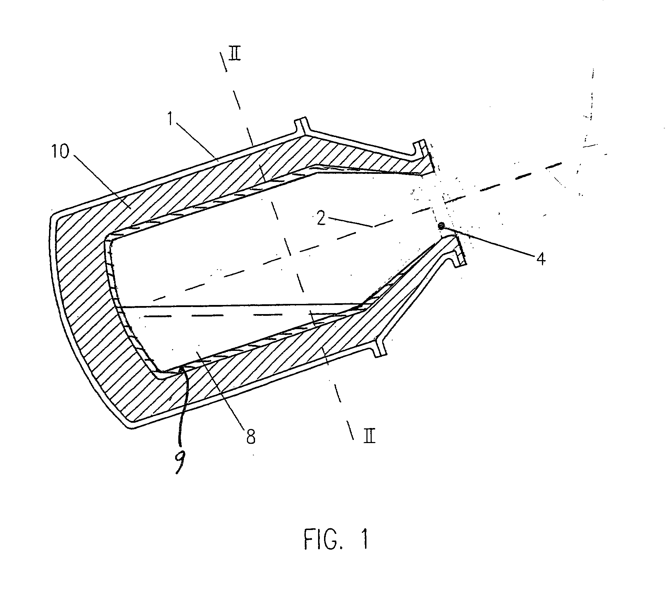

The rotary furnace vessel in Fig. 1, comprises a metal shell 1 which is covered on its interior surface with an high purity alumina refractory lining 10 and a monolithic solid layer of calcium aluminate 9. The shell of the shown furnace vessel has a cylindrical portion and portions at each longitudinal end wherein the walls of the shell taper inwardly. One end is closed by an end wall, while the other has an opening 4. In practice at least the bottom half of the refractory furnace vessel may be covered by the solid layer 9.

Inside the rotary furnace vessel, there may be a charge of aluminium dross or aluminium dross residue 8. The rotary furnace vessel may also be charged with other substances, such as solid pieces of metal scrap. The solid layer 9 protects the underlying refractory lining 10 against the impact that occurs when charging a charge into the furnace vessel.

The furnace vessel as shown has a rotational axis 2 at an angle of between 10 and 25° to the horizontal. The opening 4, may be provided with a door mechanism which during operation can be closed. Means for heating the interior of the furnace vessel, such as a burner or a plasma torch, may also be introduced into the furnace vessel via opening 4. During metallurgical operation, the furnace vessel may be rotated about axis 2 at a velocity of up to about 25 rotations per minute. The solid layer 9 protects the underlying refractory lining 10 against abrasion due to the motion of the charge 8 relative to the rotary furnace vessel.

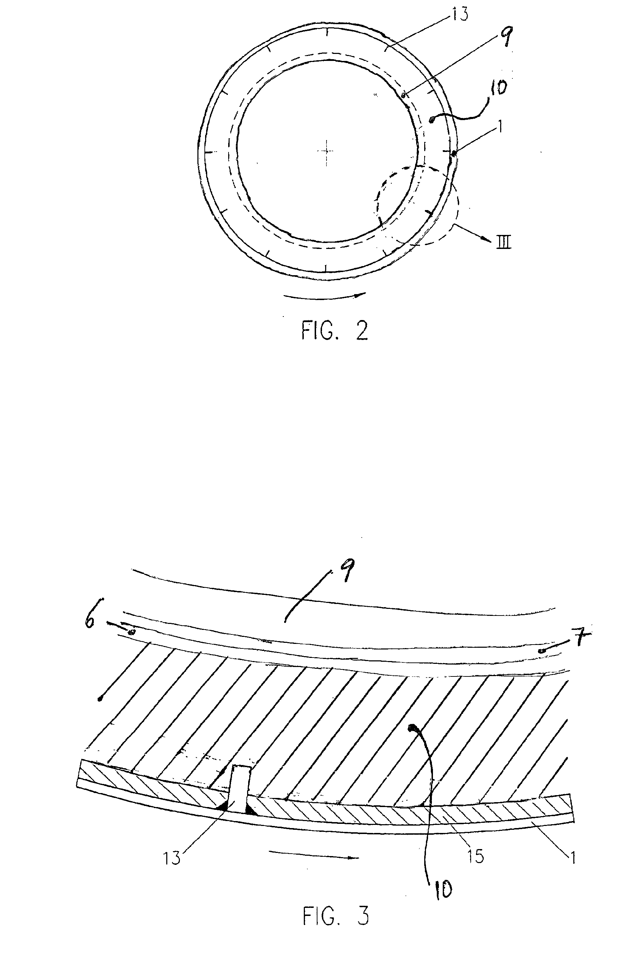

A cross section of the furnace vessel along line II is shown schematically in Fig. 2. The refractory lining 10 may be formed of refractory bricks or in unshaped manner as ramming mix, or castable or gunning mix. It can comprise fused or tabular alumina in a range of 90 to 99 %. Good results have been achieved with crucible tests having low cement castable calcium-aluminate bonded 96.5 % and 97.7 % alumina.

Alternatively, the refractory lining comprises a spinel MgO·Al₂O₃ addition to the alumina in the refractory lining. Various types of spinel-added refractory linings have been tested, such as vibrated, self-flowing, ramming mix, shotcreted, in various amounts of spinel additions in the range of 30 to 60 %. A high purity spinel refractory lining has also been tested. The best erosion resistance has been found in the range of 30 to 40 % spinel addition.

The remainder of the refractory lining (with or without the spinel MgO·Al₂O₃ addition) comprises a binder, preferably a hydraulic binding cement. Both low cement castable and ultra low cement castable can be used, but it has been found that the abrasion resistance is higher in the case of a low cement castable lining of the above described type than in the case of an ultra low cement castable. The binding cement can comprise calcium aluminate.

The solid layer of calcium aluminate is typically of a few centimetres thickness, for instance 50 mm. In the shown embodiment, the metal shell 1 is provided with support straps 13 to support the refractory lining.

The solid layer can be obtained as follows. A charge of aluminium dross residue is introduced into the furnace vessel. Aluminium dross residue, which is in the field also referred to as non-metallic product, i.e. NMP, is aluminium dross from which aluminium metal has largely been removed, for instance via a process that is described in EP-A-0690139. Aluminium dross residue may have a typical composition of:
- Al₂O₃: 50 - 80 %
- AlN: 10 - 25 %
- Al: 2 - 5 % (metallic)
- MgO: 1-10%
- SiO₂: 1-2%.

Next, a charge of a calcium-oxygen compound such as Ca(OH)₂, or CaCO₃, or the like, is mixed in such a proportion that following calcinations of the calcium-oxygen compound into CaO and oxidation of AlN into Al₂O₃ a weight-ratio of Al₂O₃ : CaO of approximately 1 : 1 is obtained. Alternatively, CaO can be admixed directly to the mixture in the desired ratio of 1 : 1 of Al₂O₃ : CaO. With this ratio, the materials are most efficiently consumed for the production of calcium aluminate. However, when the primary aim is to provide a protective solid layer covering the underlying refractory lining, it has been found that a mechanically more stable solid layer is obtained when the weight ratio of Al₂O₃ : CaO is approximately 1:0.6.

The mixture is then heated to a temperature between 1360°C and 1600°C, at which temperature the admixture reacts to form calcium aluminate. Higher temperatures are also possible. During this operation, the furnace vessel is rotated about its axis 2. The speed of rotation may be increased during the heating, starting, for instance, at a speed of 0.5 rotations per minute and rotating at, for instance, 2 rotations per minute when the temperature reaches 1360°C.

A mixture of aluminium dross residue and CaO, in relative amounts to obtain a weight ratio Al₂O₃:CaO of approximately 1:1, is found to be solid at 1350°C, plastic at 1400°C, thickly liquid at approximately 1430°C, just castable at approximately 1450°C and pourable at approximately 1500°C. A temperature between 1450°C and 1500°C is found to provide the best optimum between homogeneity of the mixture on one hand and energy consumption and refractory load on the other hand.

Depending on the amount of reacted product that has been produced, part of the reacted product may be tapped off. The tapped off product may have an economic value, as is the case with calcium-aluminate. Thus, the preparation of the furnace vessel with the solid layer can be a by-product in a process of treating aluminium dross residue.

The furnace vessel, having at least part of the reacted product inside, is then cooled while leaving the furnace vessel in rotation. Even the tilt angle between axis 2 and the vertical direction may be varied. During the cooling, the reacted product solidifies and will form a layer covering the underlying refractory lining.

Fig. 3 shows schematically detail III of Fig. 2. Layer 9 is a solid layer of essentially calcium aluminate formed using a process such as described above. This layer mainly consists of the eutectic composition C₁₂A₇ and some CA. In this notation, C denotes CaO and A denotes Al₂O₃. It is found that, between the solid layer 9 and the underlying alumina containing refractory lining 10, relatively thin interfacial layers of non-eutectic compositions of calcium aluminate have formed between the solid layer 9 and the refractory lining 10. Shown in Fig. 3 are a layer 7 having mainly CA₂ and some CA, and a layer 6 having mainly CA₆ and some CA₂. These layers are currently thought to fully cover alumina grains of the alumina containing refractory lining and enhance the chemical resistance of the alumina grains against, for instance, metal aluminium and calcium aluminate. Moreover, these interfacial layers are thought to enhance the bonding of the solid layer to the rotary furnace vessel.

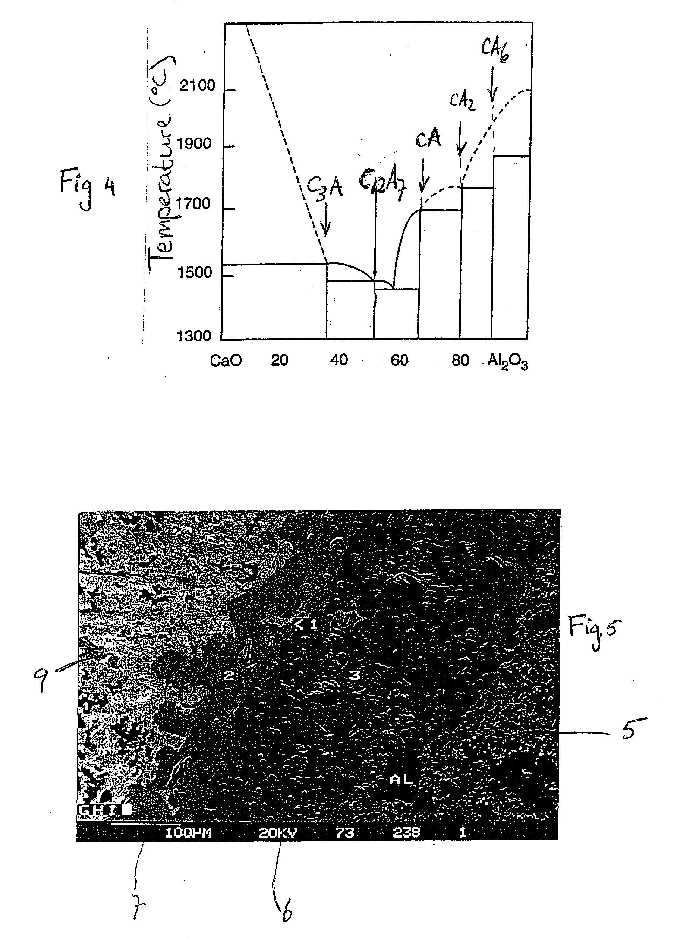

It is currently believed that the interfacial layers already form during the reaction phase when the temperature inside the furnace vessel is raised to above 1360°C. To illustrate this, a phase diagram of the CaO / Al₂O₃ binary system is shown in Fig. 4. As can be seen, the phase of C₁₂A₇ is the eutectic composition. Since the reacted calcium aluminate is in direct contact with the alumina containing refractory lining, the boundary conditions are fixed and a concentration gradient is imposed with dropping Ca concentration from C₁₂A₇ to pure Al₂O₃. At the temperature between 1360°C and 1600°C, during the formation of calcium aluminate as described above, Al-rich non-eutectic phases, having melting points higher than the eutectic phase, will precipitate against the alumina containing refractory lining, thereby covering at least the alumina grains.

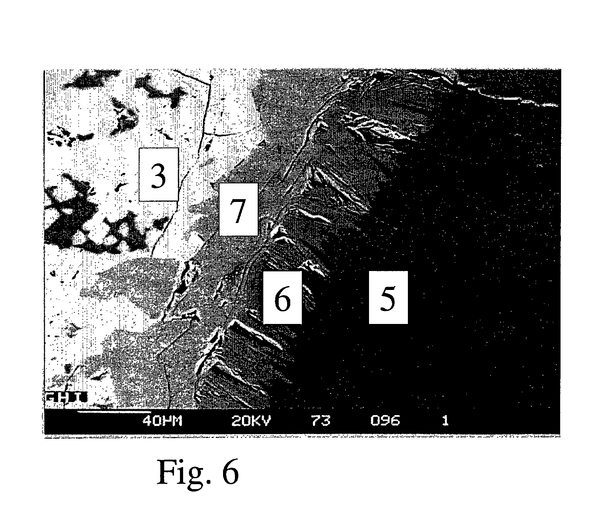

Fig. 5 shows a micrograph of an Al₂O₃ grain 5 that has been in contact with a reaction mixture containing CaO and Al₂O₃ at a temperature above 1360°C. The micrograph has been taken in a scanning electron microscope operated at 20 kV in EDX-mode. Dark colouring corresponds to aluminium. Visible are a layer 7 of CA₂ having a thickness of about 100 microns, and a layer 6 of CA₆ having a thickness of about 300 microns covering the alumina grain. The thickness and composition of these aluminium-rich layers may vary with parameters such as temperature and composition of the admixture.

Fig. 6 shows a micrograph of another interface of an Al₂O₃ grain 5 that has been in contact with a reaction mixture containing CaO and Al₂O₃ at a temperature of 1600°C. In this example, both the layer 7 of CA₂ and the layer 6 of CA₆ have a thickness of about 40 microns.

A rotary furnace vessel such as described here, can be utilised for metal recovery processes from aluminium dross, and for treating aluminium dross residue. The application of the rotary furnace vessel is not limited to these processes. It can be applied in many sorts of processes in which a product is to be heated while kept in motion, such as concrete, or, in particular, metallurgical processes.

An example of a metallurgical process is the separation a metallic coating layer from metallic coated scrap, such as brazing sheet scrap pieces. In this case, raising the temperature and the abrading effect of scrap pieces tumbling against each other enhances separation of layers.

It is advantageous to alternately use the rotary furnace vessel according to the invention for treating aluminium dross residue to produce alkaline-earth metal oxide aluminate, thereby, as a final step using some of the alkaline-earth metal aluminate to form the solid layer, and for another process such as recycling a number of batches of metallic coated scrap pieces.

The invention has been explained in an embodiment that the alkaline earth metal is Ca such that the solid protective layer comprises calcium aluminate. Good results can also be achieved using other alkaline earth based aluminates, such as magnesium aluminate.

## Claims

1. Rotary furnace vessel for metallurgical processes, comprising a shell which on its interior surface is covered with a refractory lining based on high purity alumina, spinel, or a combination thereof, **characterised in that** at least half of the refractory lining is coated, on its surface facing away from the shell, with an essentially continuous solid layer essentially consisting of alkaline-earth metal aluminate.

2. Rotary furnace vessel according to claim 1, **characterised in that** the essentially continuous solid layer essentially consists of eutectic alkaline-earth metal aluminate.

3. Rotary furnace vessel according to claim 1 or 2, **characterised in that** the alumina is alumina obtained from aluminium dross residue.

4. Rotary furnace vessel according to any one of the preceding claims, **characterised in that** the alkaline earth is Ca.

5. Rotary furnace vessel according to any one of the preceding claims, **characterised in that** the solid layer has a thickness in the range of 1 to 100 mm over the majority of its presence, preferably a thickness of about 50 mm.

6. Rotary furnace vessel according to any one of the preceding claims, **characterised in that** the essentially continuous solid layer has been formed from a mixture of an alkaline earth metal oxide and alumina that has reacted in direct contact with the refractory lining to form the alkaline-earth metal aluminate.

7. Rotary furnace vessel according to claim 6, **characterised in that** the refractory lining comprises fused or tabular alumina in a range of 90 to 99 %, preferably in a range of 96 to 98 %.

8. Rotary furnace vessel according to claim 6, **characterised in that** the refractory lining comprises alumina with a spinel MgO·Al₂O₃ addition of up to 60 % by weight.

9. Rotary furnace vessel according to any one of the claims 6, 7, or 8, **characterised in that** the refractory lining is of low cement castable type.

10. Method of providing a protective layer on a refractory lining of a rotary furnace vessel for metallurgical processes, wherein the rotary furnace vessel is provided, having a shell that on its interior surface is covered with the refractory lining, the refractory lining being based on high purity alumina, spinel, or a combination thereof, which rotary furnace vessel is at least partially filled with an alumina containing mixture, a compound comprising an alkaline earth metal and oxygen is added to the alumina containing mixture in the rotary furnace vessel to obtain a mixture containing alumina and alkaline-earth metal oxide, which mixture is then reacted at an elevated temperature to form alkaline-earth metal aluminate as an at least partially melted material, the elevated temperature being above the eutectic melting point of the mixture, and subsequently cooling down the rotary furnace vessel to a temperature below the eutectic melting point, during which cooling down the furnace is rotated around its axis of rotation and still containing at least part of the reacted aluminium dross residue such as to form the protective layer being an essentially continuous solid layer of essentially the alkaline-earth metal aluminate covering at least half of the refractory lining on its surface facing away from the shell.

11. Method according to claim 10, wherein the alumina containing mixture is provided in the form of aluminium dross residue.

12. Method according to claim 10 or 11, wherein during the subsequent cooling a tilt angle between the axis of rotation and the vertical direction is varied.

13. Method according to claim 10, 11, or 12, wherein a calcium-oxygen compound is used as the alkaline-earth metal oxide and the elevated temperature is chosen between 1360°C and 1800°C.

14. Method according to claim 13, wherein the calcium-oxide compound is added to the alumina containing mixture in an amount to obtain a weight ratio Al₂O₃:CaO in the range of 1:0,5 to 1:1,2 in the mixture, preferably in the range of 0,5 to 0,8.

15. Method of processing aluminium dross to obtain separated aluminium and aluminium dross residue, wherein the aluminium dross is introduced into a rotary furnace vessel comprising a shell which on its interior surface is covered with a refractory lining based on high purity alumina, spinel, or a combination thereof, and the aluminium dross is heated to a temperature above the melting point of aluminium and aluminium metal is separated from a solid aluminium dross residue, **characterised in that**, before introducing the aluminium dross into the rotary furnace vessel, at least half of the refractory lining is coated, on its surface facing away from the shell, with an essentially continuous solid layer essentially consisting of an alkaline-earth metal aluminate.

16. Method of processing aluminium dross residue, wherein the dross residue is reacted in rotary furnace vessel having a shell which on its interior surface is covered with a refractory lining based on high purity alumina, spinel, or a combination thereof, at an elevated temperature with an alkaline-earth metal oxide to form alkaline-earth metal aluminate as an at least partially melted material, the elevated temperature being above a eutectic melting point of the aluminium dross residue and alkaline-earth metal oxide mixture, and wherein the melted material is cooled to obtain the alkaline-earth metal aluminate in a solid form, **characterised in that**, before reacting the aluminium dross residue with the alkaline-earth metal oxide, at least half of the refractory lining is coated, on its surface facing away from the shell, with an essentially continuous solid layer essentially consisting of an alkaline-earth metal aluminate.

17. Method of recycling metallic coated scrap pieces of which the liquidus temperature of the coating layer is lower than the solidus temperature of the core layer, such as brazing sheet scrap pieces, by introducing the scrap pieces into a rotary furnace vessel, then at least partially removing the coating layer from the core of the scrap pieces by heating the scrap pieces to a temperature above the solidus temperature of the coating layer while rotating the rotary furnace vessel, **characterised in that** the rotary furnace vessel has a shell which on its interior surface is covered with a refractory lining based on high purity alumina, spinel, or a combination thereof, of which at least half is coated, on its surface facing away from the shell, with an essentially continuous solid layer essentially consisting of an alkaline-earth metal aluminate.
